# EUROPÄISCHE PATENTANMELDUNG

(11) **EP 0 701 110 A2**
(43) Veröffentlichungstag der Anmeldung: **13.03.1996**
(21) Anmeldenummer: 95112225.8
(22) Anmeldetag: 03.08.1995
(51) Int. Cl.: G01F 23/26

(54) **Kapazitive Sonde zur Überwachung von Flüssigkeit in einem Behälter**

(30) Priorität: 12.08.1994 DE 4428616
(71) Anmelder: GESTRA AG, D-28215 Bremen (DE)
(72) Erfinder: Schröter, Holger, D-28832 Achim (DE); Politt, Joachim-Christian, Dr., D-28215 Bremen (DE); Borchers, Kerstin, D-28307 Bremen (DE)
(74) Vertreter: Eisenführ, Speiser & Partner

(57) **Zusammenfassung**

Die Erfindung betrifft eine kapazitive Sonde zur Überwachung von Flüssigkeit in einem Behälter mit einem am Behälter zu befestigenden Sondengehäuse, einer im Sondengehäuse gehaltenen Sensorelektrode und einer die Sensorelektrode umgebenden Isolationshülle, die an ihrem gehäusefernen Ende geschlossen und an ihrem anderen, offenen Ende dichtend am Sondengehäuse gehalten ist, und sich dadurch auszeichnet, daß die Isolationshülle als Keramikhülse ausgebildet ist, die die Sensorelektrode unter Bildung eines Freiraumes umgibt.

## Beschreibung

Die Erfindung betrifft eine kapazitive Sonde der im Oberbegriff des Hauptanspruches spezifizierten Art.

Bei derartigen kapazitiven Sonden (US-PS 5 272 921) ist PTFE - Polytetrafluoräthylen - als Werkstoff für die Isolationshülle gebräuchlich. Allerdings ist dieser Werkstoff für den Einsatz bei hohen Temperaturen, z. B. über 240° C, und hohen Drücken ungeeignet, wie sie beispielsweise in Hochdruckdampfkesseln und -anlagen auftreten.

Der Erfindung liegt die Aufgabe zugrunde, eine kapazitive Sonde der eingangs genannten Art zu schaffen, die für einen großen Temperatur- und Druckbereich geeignet sowie auch gegen hohe pH-Werte resistent ist.

Diese Aufgabe wird durch die im Anspruch 1 angegebenen Merkmale gelöst.

Die Unteransprüche haben vorteilhafte Weiterbildungen der Erfindung zum Gegenstand.

Nach der Erfindung ist die Keramikhülse selbst nur ein Teil der Isolierung zwischen einem zu messenden Medium und der Sensorelektrode. Ein weiterer Teil der Isolierung besteht in dem Freiraum zwischen der Keramikhülse und der Sensorelektrode. Für die außenliegende Keramikhülse können dadurch Werkstoffe verwendet werden, die besonders hohen physikalischen und chemischen Belastungen - Druck, Temperatur, pH-Wert und dergleichen - standhalten, wie sie insbesondere in Hochdruckdampfkesseln und -anlagen auftreten. Diese Keramikwerkstoffe sind für wesentlich höhere Drücke und Temperaturen geeignet als PTFE. Daß derartige Keramikwerkstoffe in der Regel keine für kapazitive Sonden zufriedenstellende elektrische Funktion über einen großen Temperaturbereich ergeben, wird durch die zusätzliche Isolierung in dem Freiraum zwischen der Keramikhülse und der Sensorelektrode kompensiert, indem der Leitwert in dem Freiraum über einen großen Temperaturbereich sehr gering ist. Hieraus ergibt sich der weitere Vorteil, daß der Leitwert der gesamten Isolierung und damit die störende konduktive Stromkomponente bei der Messung wesentlich kleiner ist als bei herkömmlichen Sonden ohne Freiraum.

Nach Anspruch 2 bis 6 ist der Freiraum zwischen der Keramikhülse und der Sensorelektrode zumindest teilweise mit Isolationsmittel ausgefüllt. Dem oder den Isolationsmitteln kommt im wesentlichen die Aufgabe der elektrischen Isolierung der Sensorelektrode zu. Außerdem stützen die Isolationsmittel die Keramikhülse und die Sensorelektrode gegeneinander ab und tragen so vorteilhaft zur mechanischen Stabilität der Sonde bei. Diese innenliegenden Isolationsmittel kommen mit dem Medium im Behälter nicht in Berührung, sie sind weder dessen Druck noch dessen pH-Wert ausgesetzt. Es werden Isolationsmittel eingesetzt, die die für eine kapazitive Sonde vorteilhaften elektrischen Eigenschaften - insbesondere geringer elektrischer Leitwert und hohe Dielektrizitätskonstante - über einen großen Temperaturbereich aufweisen. Mit ihren Isolationseigenschaften tragen die Isolationsmittel zu einem zuverlässigen und von Verfälschungen weitgehend freien Meßsignal bei. Die Isolationsmittel sind vorzugsweise als einstückiges und weitestgehend homogenes Bauteil der Sonde verwirklicht.

Ein besonders geeignetes Material für die zwischen der Keramikhülse und der Sensorelektrode angeordneten Isolationsmittel ist Aluminiumoxyd. Es weist über einen sehr großen Temperaturbereich einen niedrigen elektrischen Leitwert und eine hohe Dielektrizitätskonstante auf.

Nach Anspruch 7 bis 11 besteht die Keramikhülse aus einem Material, das chemisch beständiger ist als der Werkstoff, aus dem die Isolationsmittel bestehen und das insbesondere bei erhöhtem Druck für Fluide und Gase undurchlässig ist. Hauptaufgabe der äußeren Keramikhülse ist es, die Sensorelektrode in einem großen Temperatur- und Druckbereich vor mechanischen und chemischen Einflüssen zu schützen und gegenüber dem umgebenden Medium abzudichten. Es ist ein besonderer Vorzug dieser Erfindung, daß die Keramikhülse nicht gleichzeitig auch noch die besten elektrischen Eigenschaften aufweisen muß, da besonders gute elektrische Eigenschaften der Sonde durch den Freiraum bzw. in dem Freiraum angeordnete Isolationsmittel sichergestellt werden, so daß die Keramikhülse auf den Schutz vor äußeren Einflüssen hin optimiert werden kann.

Ein besonders geeignetes Material für die äußere Keramikhülse ist Zirkoniumoxyd. Es hält beispielsweise sehr hohen Temperaturen, Drücken und auch pH-Werten stand.

Nach Anspruch 12 sind die innenliegenden Isolationsmittel auf jenen Längenbereich der äußeren Keramikhülse beschränkt, der außen von Flüssigkeit umgeben sein kann. Daraus resultiert ein besonders großer Kapazitätsunterschied zwischen der in die Flüssigkeit eingetauchten und der ausgetauchten Sonde. Zugleich fallen eventuelle Störeinflüsse, die oberhalb des Flüssigkeitsbereiches und im Bereich des Sondengehäuses temperaturabhängig entstehen können, besonders klein aus. Eine Verfälschung des Niveausignals der Sonde tritt nicht ein.

Die Merkmale des Anspruchs 13 vereinen eine verläßliche Abdichtung der Keramikhülse im Sondengehäuse und eine zuverlässige axiale Halterung der Keramikhülse gegen den im Behälter herrschenden Betriebsdruck.

Mit der erfindungsgemäßen Sonde lassen sich daher insgesamt besonders hohe Anforderungen erfüllen.

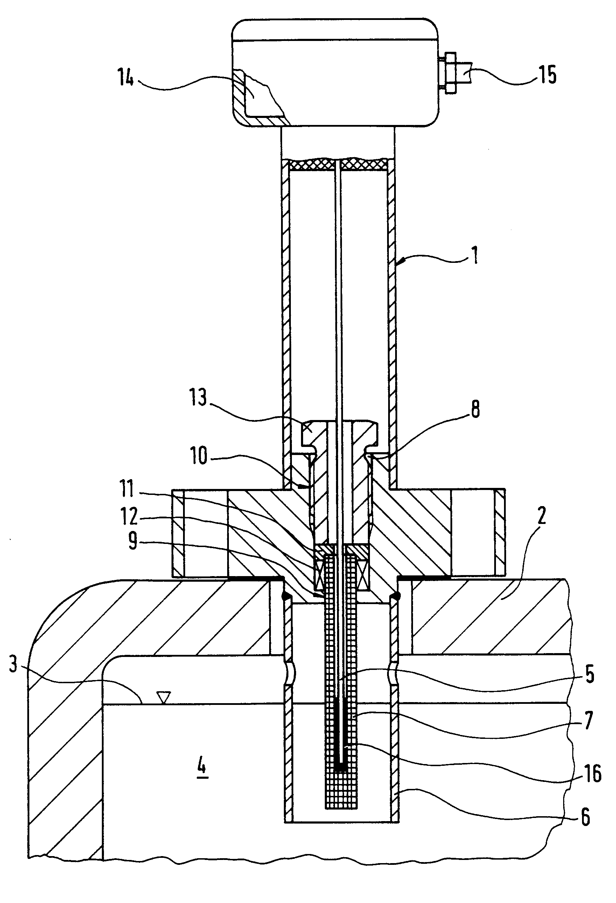

In der Zeichnung ist ein Ausführungsbeispiel der erfindungsgemäßen kapazitiven Sonde dargestellt.

Die Sonde weist ein Sondengehäuse 1 auf, das an einem Behälter 2, z.B. einem Hochdruckdampfkessel, angebracht ist (Befestigungsmittel nicht dargestellt). In dem Behälter 2 soll das Höchstniveau 3 einer Flüssigkeit 4, z.B. Wasser, mit einer aus dem Sondengehäuse 1 nach unten in den Behälter 2 hineinragenden Sensorelektrode 5 überwacht werden, die dort allseitig von einer Isolationshülle umgeben ist. Ein mit dem Sondengehäuse 1 verbundenes Schutzrohr 6 umgibt die Isolationshülle mit radialem Abstand.

Die Isolationshülle ist als Keramikhülse 7 ausgebildet; sie umgibt die Sensorelektrode 5 mit Abstand und ist an ihrem gehäusefernen Ende geschlossen. Das andere, offene Ende der Keramikhülse 7 ragt in eine Durchführungsbohrung 8 des Sondenhehäuses 1 hinein, die an ihrem behälterseitigen Ende eine die Keramikhülse 7 eng umschließende Verengung 9 und daran anschließend eine Erweiterung 10 aufweist. In der Erweiterung 10 ist eine auf dem offenen Ende der Keramikhülse 7 aufliegende Stützscheibe 11 angeordnet. Zwischen ihr und der Verengung 9 befindet sich eine Dichtungspackung 12. Auf die dieser Dichtungspackung 12 abgewandten Seite der Stützscheibe 11 wirkt eine axial verstellbar in der Durchführungsbohrung 8 angeordnete Druckbuchse 13 ein. Mit ihr wird die Dichtungspackung 12 so verpreßt, daß zwischen dem Sondengehäuse 1 und der Keramikhülse 7 eine zuverlässige Abdichtung gegen den im Behälter 2 herrschenden Druck erreicht ist. Zugleich stützt die Stützscheibe 11 die Keramikhülse 7 axial gegen den Druck im Behälter 2 ab. Die von der Dichtungspackung 12 auf die Keramikhülse 7 ausgeübte Radialkraft bewirkt gleichfalls eine Lagefixierung der Keramikhülse 7.

Die als Metallstab ausgebildete Sensorelektrode 5 erstreckt sich aus der Keramikhülse 7 durch das Sondengehäuse 1 in eine Anschlußkammer 14. Dort ist die Sensorelektrode 5 direkt oder über eine Elektronikeinheit, z.B. einen Vorverstärker, an eine Anschlußleitung 15 angeschlossen, die zu geeigneten Überwachungs-, Steuerungs- oder Auswerteeinrichtungen (nicht dargestellt) führt.

In der Keramikhülse 7 ist in dem Freiraum zwischen ihr und der Sensorelektrode 5 eine innengelegene Keramikhülse 16 angeordnet, die vorzugsweise auf ihrem gesamten Umfang und an ihrem unteren Ende geschlossen ist. Die innengelegene Keramikhülse 16 umgibt die Sensorelektrode 5 in jenem Bereich der äußeren Keramikhülse 7, der außen von der Flüssigkeit 4 umgeben sein kann; sie erstreckt sich vom unteren, behälterfernen Ende der Sensorelektrode 5 bis hinauf zum Höchstniveau 3.

Die Keramikhülsen 7, 16 bestehen aus unterschiedlichen Keramikwerkstoffen. Bei der äußeren Keramikhülse 7 handelt es sich um Zirkoniumoxyd. Sie gewährleistet selbst unter hohen Drücken und Temperaturen, wie sie beispielsweise in einem Hochdruckdampfkessel auftreten, dauerhaft eine medium- und druckdichte Umhüllung der innengelegenen Keramikhülse 16 und der Sensorelektrode 5; zumal sie gegen hohe pH-Werte resistent ist. Allerdings ist der elektrische Leitwert dieser Keramik sehr starktemperaturabhängig; bei hohen Temperaturen ist er so hoch, daß eine sichere Auswertung des elektrischen Signals über einen großen Temperaturbereich ohne die innengelegene Keramikhülse 16 nicht möglich wäre. Die innengelegene Keramikhülse 16 besteht aus Aluminiumoxyd. Ihr elektrischer Leitwert ist über einen sehr großen Temperaturbereich sehr gering.

Zur Überwachung der Flüssigkeit im Behälter 2 wird eine über die Anschlußleitung 15 zugeführte elektrische Wechselspannung an die Sensorelektrode 5 und an das als Gegenelektrode dienende Schutzrohr 6 angelegt. Der daraufhin fließende elektrische Strom dient als Signal für den Flüssigkeitsstand im Behälter. Der elektrische Strom weist eine kapazitive und eine konduktive Komponente auf. Die Flüssigkeit 4 im Behälter 2, z. B. Wasser, weist eine sehr hohe Dielektrizitätskonstante auf. Im Gegensatz dazu ist die Dielektrizitätskonstante des darüber befindlichen gasförmigen Mediums, z. B. Wasserdampf, sehr gering.

Im Bereich der zu überwachenden Flüssigkeit - d.h. vom unteren Ende der Sensorelektrode 5 bis maximal hinauf zum Höchstniveau 3 - wird die kapazitive Stromkomponente von der niveauabhängigen Kapazität zwischen dem Schutzrohr 6 und der äußeren Keramikhülse 7 sowie zusätzlich durch die Dielektrizitätskonstanten der beiden Keramikhülsen 7, 16 bestimmt. Die konduktive Stromkomponente wird in diesem Bereich durch die elektrischen Leitwerte der beiden Keramikhülsen 7, 16 bestimmt. Der Leitwert der äußeren Keramikhülse 7 ist bei hohen Temperaturen groß. Der Leitwert der innengelegenen Keramikhülse 16 ist hingegen auch bei hohen Temperaturen sehr gering. Aufgrund dessen ist im Bereich der zu überwachenden Flüssigkeit 4 die konduktive Stromkomponente relativ zur kapazitiven Stromkomponente über einen großen Temperaturbereich - also auch bei hohen Temperaturen - sehr klein. Die aus Änderungen des Flüssigkeitsstandes resultierende Stromänderung beschränkt sich daher im wesentlichen auf die kapazitive Stromkomponente und ist damit proportional dem Flüssigkeitsstand; sie wird durch temperaturabhängige Leitwertänderungen der äußeren Keramikhülse 7 nicht verfälscht.

Der Einfluß auf die kapazitive Stromkomponente wird im Bereich vom Höchstniveau 3 bis hinauf zum Sondengehäuse 1 wesentlich von den raltiv niedrigen Dielektrizitätskonstanten des zwischen dem Schutzrohr 6 und der äußeren Keramikhülse 7 vorhandenen gasförmigen Mediums sowie der zwischen der äußeren Keramikhülse 7 und der Sensorelektrode 5 vorhandenen Luft geprägt. In dem in das Sondengehäuse 1 hineinragende Teil der äußeren Keramikhülse 7 gilt dies für die relativ niedrige Dielektrizitätskonstante der Luft zwischen der Keramikhülse 7 und der Sensorelektrode 5. Infolgedessen wird oberhalb des Höchstniveaus 3 die kapazitive Stromkomponente nur unwesentlich beeinflußt.

Der Einfluß auf die konduktive Stromkomponente wird in dem Bereich oberhalb des Höchstniveaus 3 wesentlich durch den relativ geringen elektrischen Leitwert der Luft zwischen der Keraminkhülse 7 und der Sensorelektrode 5 geprägt. Deshalb wird auch die konduktive Stromkomponente oberhalb des Höchstniveaus 3 nur unwesentlich beeinflußt.

Die Sonde liefert somit innerhalb eines großen Temperaturbereiches - also sowohl bei niedriger (z. B. Raumtemperatur) als auch bei hoher Temperatur (z. B. 360°C) - in eingetauchtem und in ausgetauchtem Zustand jeweils ein signifikantes Signal, das frei von temperaturbedingten Verfälschungen ist.

Das Schutzrohr 6 ist als Gegenelektrode nicht zwingend erforderlich; ist der Behälter 2 elektrisch leitend, dann kann er als Gegenelektrode fungieren. In der Zeichnung ist die Sonde zur Überwachung eines oberen Niveaugrenzwertes 3 senkrecht angeordnet. Alternativ könnte die Sonde beispielsweise schräg oder waagerecht in Höhe des jeweiligen zu überwachenden Niveaus seitlich am Behälter 2 angeordnet werden. In einem solchen Fall würde sich die innengelegene Keramikhülse 16 vorzugsweise vom behälterfernen Ende der Sensorelektrode 5 bis an das Sondengehäuse 1 erstrecken, ohne darin hineinzuragen. Im übrigen wäre beispielsweise auch eine Sonde zur kontinuierlichen Niveaukontrolle realisierbar.

## Patentansprüche

1. Kapazitive Sonde zur Überwachung von Flüssigkeit in einem Behälter mit
- einem am Behälter zu befestigenden Sondengehäuse,
- einer im Sondengehäuse gehaltenen Sensorelektrode und
- einer die Sensorelektrode umgebenden Isolationshülle, die an ihrem gehäusefernen Ende geschlossen und an ihrem anderen, offenen Ende dichtend am Sondengehäuse gehalten ist,
dadurch gekennzeichnet, daß
- die Isolationshülle als Keramikhülse (7) ausgebildet ist, die die Sensorelektrode (5) unter Bildung eines Freiraumes umgibt.

2. Sonde nach Anspruch 1,
dadurch gekennzeichnet, daß in dem Freiraum zwischen der Keramikhülse (7) und der Sensorelektrode (5) Isolationsmittel (16) angeordnet sind.

3. Sonde nach Anspruch 2,
dadurch gekennzeichnet, daß die Isolationsmittel (16) aus einem Werkstoff bestehen, der einen geringeren elektrischen Leitwert aufweist als die Keramik der Keramikhülse (7).

4. Sonde nach Anspruch 2 oder 3,
dadurch gekennzeichnet, daß die Isolationsmittel (16) aus einem Werkstoff bestehen, der eine höhere Dielektrizitätskonstante aufweist, als die Keramik der Keramikhülse (7).

5. Sonde nach einem oder mehreren der Ansprüche 2 bis 4,
dadurch gekennzeichnet, daß die Isolationsmittel (16) aus Keramik bestehen.

6. Sonde nach einem oder mehreren der Ansprüche 2 bis 5,
dadurch gekennzeichnet, daß die Isolationsmittel (16) aus Aluminiumoxyd bestehen.

7. Sonde nach einem oder mehreren der Ansprüche 2 bis 6,
dadurch gekennzeichnet, daß die Keramikhülse (7) aus einer Keramik besteht, die chemisch beständiger ist als der Werkstoff, aus dem die Isolationsmittel (16) bestehen.

8. Sonde nach einem oder mehreren der Ansprüche 2 bis 7,
dadurch gekennzeichnet, daß die Keramikhülse (7) aus einer Keramik besteht, die eine größere Druckbeständigkeit aufweist als der Werkstoff, aus dem die Isolationsmittel (16) bestehen.

9. Sonde nach einem oder mehreren der Ansprüche 2 bis 8,
dadurch gekennzeichnet, daß die Keramikhülse (7) aus einer Keramik besteht, die insbesondere bei Überdruck für Fluide und/oder Gase undurchlässiger ist als der Werkstoff, aus dem die Isolationsmittel (16) bestehen.

10. Sonde nach einem oder mehreren der vorhergehenden Ansprüche,
dadurch gekennzeichnet, daß die Keramikhülse (7) aus Zirkoniumoxyd besteht.

11. Sonde nach einem oder mehreren der Ansprüche 2 bis 10,
dadurch gekennzeichnet, daß die physikalischen und chemischen Eigenschaften der Keramik der Keramikhülse (7) und des Werkstoffs, aus dem die Isolationsmittel (16) bestehen, über einen großen Temparaturbereich, insbesondere bei hohen Temparaturen, weitgehend konstant sind.

12. Sonde nach einem oder mehreren der Ansprüche 2 bis 11,
welche in einem bis zu einem bestimmten Füllstand mit Flüssigkeit befüllbaren Behälter ragt,
dadurch gekennzeichnet, daß die Isolationsmittel (16) sich über den Abschnitt der Keramikhülse (7) erstrecken, der sich unterhalb des Füllstandes befindet.

13. Sonde nach einem oder mehreren der vorhergehenden Ansprüche in einem Behälter,
dadurch gekennzeichnet, daß
- das Sondengehäuse (1) eine Durchführungsbohrung (8) aufweist, in die die Keramikhülse (7) hineinragt,
- die Durchführungsbohrung (8) an ihrem behälterseitigen Ende eine die Keramikhülse (7) eng umgebende Verengung (9) und auf deren Behälter abgewandten Seite eine Erweiterung (10) aufweist,
- in der Erweiterung (10) eine die Keramikhülse (7) umschließende Dichtungspackung (12) angeordnet und
- der Verengung (9) gegenüberliegend in der Erweiterung (10) Mittel (11, 13) vorgesehen sind, die die Keramikhülse (7) gegen den im Behälter (2) herrschenden Betriebsdruck axial stützen und die umgebende Dichtungspackung (12) verpressen.
